# EUROPÄISCHE PATENTSCHRIFT

(11) **EP 2 801 980 B1**
(45) Veröffentlichungstag und Bekanntmachung des Hinweises auf die Patenterteilung: **09.03.2016**
(21) Anmeldenummer: 14162333.0
(22) Anmeldetag: 28.03.2014
(51) Int. Cl.: G21C 19/18, G21C 19/10

(54) **Transfervorrichtung für den Transfer von Brennelementen**
Transfer device for the transfer of fuel elements
Dispositif de transfert pour le transfert d'éléments combustibles

(30) Priorität: 08.05.2013 DE 102013104761
(43) Veröffentlichungstag der Anmeldung: 12.11.2014
(73) Patentinhaber: Siempelkamp Ingenieur und Service GmbH, 47803 Krefeld (DE)
(72) Erfinder: Jurianz, Christian, 47803 Krefeld (DE); Bauer, Stefan, 64683 Einhausen (DE); Steck, Stefan Oliver, 64372 Ober-Ramstedt (DE)
(74) Vertreter: von dem Borne, Andreas

(56) Entgegenhaltungen:
- US-A- 4 096 031
- US-A- 4 202 729

## Beschreibung

Die Erfindung betrifft eine Transfervorrichtung für den Transfer von Brennelementen zwischen einem oberen Becken und einem unteren Becken einer kerntechnischen Anlage, z. B. einem oberen Becken innerhalb eines Reaktorgebäudes und einem unteren Becken eines Brennelementelagers, wobei der Flüssigkeitsspiegel des oberen Beckens (während des Transfers) oberhalb des Flüssigkeitsspiegels des unteren Beckens liegt, mit
- einem das obere und das untere Becken verbindenden und schräg zur Vertikalen verlaufenden Transferrohr,
- einem oder mehreren Transferkörben, in welche jeweils ein oder mehrere Brennelemente für den Transfer durch das Transferrohr einsetzbar sind,
wobei das Transferrohr mit einem oder mehreren Absperrelementen ausgerüstet ist, mit denen der Rohrquerschnitt absperrbar ist. Bei dem Reaktor kann es sich z. B. um einen Siedewasserreaktor oder auch einen Druckwasserreaktor handeln.

Dem Austausch und Transfer von Brennelementen kommt innerhalb einer kerntechnischen Anlage in der Praxis besondere Bedeutung zu. Dabei bestehen Brennelemente in der Regel aus einem Bündel einzelner Brennstäbe und das Brennelement selbst ist mit einem Griff oder dergleichen ausgerüstet, so dass es mit Hilfe geeigneter Maschinen transportiert werden kann, um es z. B. in den Reaktorbehälter einzusetzen oder aus dem Reaktorbehälter zu entfernen. So müssen insbesondere abgebrannte Brennelemente aus dem Reaktorbehälter entfernt und z. B. in ein Brennelementelager überführt werden. Umgekehrt müssen frische Brennelemente in den Reaktorbehälter eingebracht werden. In der Praxis ist es üblich, das obere Becken innerhalb des Reaktorgebäudes während des Brennelementeaustauschs zu fluten, so dass die Brennelemente innerhalb der Flüssigkeit (Wasser) transportiert werden. Sie werden aus dem geöffneten Reaktorbehälter mit Hilfe einer oberhalb des Reaktorbehälters verfahrbaren Lademaschine entnommen und innerhalb des oberen Beckens verfahren und gegebenenfalls in einem Pufferbecken/Abklingbecken zwischengelagert. Aus dem oberen Becken müssen die Brennelemente mit Hilfe einer Transfervorrichtung z. B. in ein Brennelementelager transportiert werden, welches ebenfalls mit einem (unteren) Becken ausgerüstet ist, wobei das obere Becken (z. B. innerhalb des Reaktorgebäudes) und das untere Becken (z. B. innerhalb des Brennelementelagers) getrennt voneinander mit unterschiedlichem Flüssigkeitsniveau gefüllt sind. Zwischen diesen beiden Becken erfolgt der Transfer mit Hilfe der Transfervorrichtung durch ein schräg zur Vertikalen angeordnetes Transferrohr. Solche Transfervorrichtungen sind aus der Praxis grundsätzlich bekannt. Dabei ist man bestrebt, den Zeitaufwand für einen Brennelementewechsel möglichst kurz zu halten, um Unterbrechungen des Leistungsbetriebes des Reaktors möglichst zu reduzieren. Der Reduzierung des Zeitraums für den Brennelementewechsel kommt unter wirtschaftlichen Aspekten besondere Bedeutung zu.

Aus der DE 23 38 228 ist eine Transfervorrichtung für Brennelemente einer Kernreaktoranlage bekannt, bei welcher die Brennelemente durch ein schräg zur Vertikalen orientiertes Transferrohr transportiert werden. Das Transferrohr führt durch die Sicherheitshülle hindurch, welche den Reaktordruckbehälter eines Druckwasserreaktors gasdicht umschließt. Das innere Becken und das äußere Becken sind während des Brennelementewechsels auf ein und dasselbe Flüssigkeitsniveau geflutet, so dass während des Transfers der Brennelemente keine Absperrmaßnahmen im Bereich des Transferrohrs erforderlich sind. Der Transport erfolgt mit Hilfe einer Seilzugvorrichtung und mit Hilfe eines Wagens, der zwei Kammern aufweist, von denen die eine ein frisches Brennelement für die Hinfahrt und die andere ein verbrauchtes Brennelement für die Rückfahrt aufnimmt. Der Wagen ist dabei aus einer vertikalen Umladeposition in eine horizontale bzw. schräge Transferposition schwenkbar. Die bekannte Transfervorrichtung dient ausschließlich dem Transfer von Brennelementen zwischen zwei Becken, die mit demselben Flüssigkeitsniveau gefüllt sind.

Gleiches gilt für die aus der DE 27 28 445 bzw. US 4 096 031 bekannte Transfervorrichtung, mit der Brennelemente unmittelbar zwischen dem Reaktorbehälter und einem direkt daneben angeordneten Speicherbehälter transportiert werden, wobei der Reaktorbehälter und der Speicherbehälter über ein schräg zur Vertikalen verlaufendes Transportrohr miteinander verbunden sind. Endseitig dieses Transferrohrs sind Umladeeinrichtungen vorgesehen, mit denen die Brennelemente aus einer schrägen Transferrichtung in eine vertikale Umladerichtung schwenkbar sind. Der Transfer durch das Transferrohr erfolgt mit Hilfe einer Seilzugvorrichtung, welche das Brennelement jeweils mit einem Greifer direkt greift.

Die DE 1 042 778 (bzw. US 3 058 900) beschreibt eine Beschickvorrichtung für Kernreaktoren, wobei Brennelemente unmittelbar zwischen dem Reaktorbehälter und einem unterhalb des Reaktorbehälters horizontal verlaufenden Kanals transportiert werden, wobei der Reaktorbehälter und der Kanal über ein Rohr miteinander verbunden sind, welches schräg zur Vertikalen ausgerichtet ist. Für den Transfer wird ein Brennelement in eine Patrone eingesetzt, welche durch das Rohr transportierbar ist, wobei die Patrone oberseitig mit einem Griff oder dergleichen ausgerüstet ist, so dass sie mit einem Werkzeug greifbar ist. Das Rohr ist mit einem Absperrorgan vollständig absperrbar. Dieses Absperrorgan wird geöffnet, wenn mit Hilfe der Beschickvorrichtung ein Brennelementewechsel erfolgt.

Aus der DE 27 46 391 (bzw. US 4 096 031) ist eine Lade- und Entladevorrichtung für Brennelemente bekannt, welche oberseitig auf den Reaktorbehälter aufgesetzt ist und welche zwei entgegengesetzt schräg zur Vertikalen angeordnete Rampen aufweist, zwischen denen die Brennelemente mit einer Schwenkvorrichtung schwenkbar sind. Eine ähnlich aufgebaute Vorrichtung ist aus der EP 0 048 671 B1 (bzw. US 4 440 178) bekannt.

Der Erfindung liegt die Aufgabe zugrunde, eine Transfervorrichtung für einen schnellen und wirtschaftlichen Transfer von Brennelementen zwischen einem oberen Becken und einem unteren Becken einer kerntechnischen Anlage zu schaffen, wobei der Flüssigkeitsspiegel des oberen Beckens (auch während des Transfers) oberhalb des Flüssigkeitsspiegels des unteren Beckens liegt.

Zur Lösung dieser Aufgabe ist die erfindungsgemäße Transfervorrichtung der eingangs beschriebenen Art gekennzeichnet durch eine Seilzugeinrichtung mit einem innerhalb des Transferrohrs geführten Zugseils zum Anheben und Absenken der Transferkörbe innerhalb des Transferrohrs, wobei zumindest ein Absperrelement als teilschließendes Absperrelement mit einem Seildurchlass versehen ist, durch welchen das Zugseil in Schließstellung hindurchführbar ist.

Die Erfindung geht dabei zunächst einmal von der Erkenntnis aus, dass ein einwandfreier Transfer der Brennelemente durch ein Transferrohr mit Hilfe einer Seilzugeinrichtung möglich ist. Solche Seilzugeinrichtungen kommen bei den eingangs beschriebenen Transfervorrichtungen im Stand der Technik zum Einsatz, bei denen die beiden Becken, zwischen denen der Transfer erfolgt, auf ein und dasselbe Flüssigkeitsniveau geflutet sind, da in diesem Fall Absperrelemente während des Transfers ohne Weiteres geöffnet werden können. Erfindungsgemäß gelingt nun der Transfer mit einer Seilzugeinrichtung zwischen einem oberen Becken und einem unteren Becken, die auf unterschiedliches Flüssigkeitsniveau gefüllt sind. Um ein Abfließen der Flüssigkeit aus dem oberen Becken in das untere Becken während des Transfers zu verhindern, wird zumindest ein teilschließendes Absperrelement in das Transferrohr integriert. Teilschließendes Absperrelement meint, dass das Absperrelement zwar einerseits in eine vollständig geöffnete und andererseits in eine geschlossene Position gebracht werden kann, dass das Absperrelement jedoch in der geschlossenen Position (Schließstellung) nach wie vor einen Seildurchlass und folglich eine entsprechend dimensionierte Öffnung aufweist, so dass das Zugseil der Seilzugeinrichtung für einen einwandfreien Transfer durch das Absperrelement hindurchgeführt werden kann. Die dabei aufgrund des Seildurchlasses evtl. auftretenden geringen Leckagen können in Kauf genommen werden und durch entsprechendes Pumpen wieder ausgeglichen werden. Entscheidend ist die Tatsache, dass solche Leckagen mit Hilfe der erfindungsgemäßen teilschließenden Absperrelemente auf ein Minimum reduziert werden können.

Bevorzugt ist das Transferrohr mit mehreren Absperrelementen ausgerüstet, und zwar zum einen mit einem oder mehreren vollschließenden Absperrelementen ohne Seildurchlass und außerdem einem oder mehreren teilschließenden Absperrelementen mit Seildurchlass. So ist es besonders bevorzugt vorgesehen, dass das Transferrohr an seinem oberen Ende ein oberes vollschließendes Absperrelement ohne Seildurchlass und an seinem unteren Ende ebenfalls ein unteres vollschließendes Absperrelement ohne Seildurchlass aufweist und dass außerdem zwischen dem oberen und dem unteren Absperrelement ein oder mehrere teilschließende Zwischen-Absperrelemente mit Seildurchlass vorgesehen sind. Eine solche Ausführungsform mit einerseits vollschließenden Absperrelementen und andererseits teilschließenden Absperrelementen ermöglicht einen besonders effizienten Betrieb. Denn das oder die vollschließenden Absperrelemente können für ein vollständiges Abdichten des Transferrohres sorgen und insbesondere dann geschlossen werden, wenn kein Transfer erfolgt. Aber auch während des Transfers besteht die Möglichkeit, das oder die vollschließenden Absperrelemente immer dann zu schließen, wenn in dem Bereich des Absperrelementes kein Zugseil geführt ist.

Ferner ist es besonders vorteilhaft, nicht lediglich ein teilschließendes Zwischen-Absperrelement, sondern mehrere teilschließende Absperrelemente, z. B. zwei teilschließende Absperrelemente in das Transferrohr zu integrieren. Auf diese Weise können diese Absperrelemente gleichsam schleusenartig zeitlich nacheinander geöffnet und geschlossen werden, so dass z. B. im Zuge des Absenkens der Brennelemente durch das Transferrohr das jeweilige Zwischen-Absperrelement nur kurzzeitig vollständig geöffnet werden muss, wenn die Brennelemente durch das Absperrelement hindurchgeführt werden müssen.

Die Absperrelemente können konstruktiv in unterschiedlichster Weise ausgebildet werden. So ist es zweckmäßig, die oberen und/oder unteren Absperrelemente, z. B. vollschließende Absperrelemente, als Schieber auszubilden, z. B. als pneumatisch, elektrisch oder hydraulisch angetriebene Schieber. Alternativ können die oberen/unteren und/oder vollschließenden Absperrelemente aber auch als Kugelventile, z. B. pneumatisch, elektrisch oder hydraulisch angetriebene Kugelventile ausgebildet sein.

Die teilschließenden Absperrelemente sind bevorzugt als Kugelventile ausgebildet, deren Ventilkugel mit einem Seildurchlass versehen ist. Es besteht jedoch alternativ auch die Möglichkeit, die teilschließenden Absperrelemente als Schieber auszubilden und deren Schieberplatte mit einem Seildurchlass zu versehen. Auch bei den teilschließenden Absperrelementen ist bevorzugt ein pneumatischer Antrieb vorgesehen. Alternativ können auch elektrische oder hydraulische Antriebe eingesetzt werden. Die teilschließenden Absperrelemente weisen als Seildurchlass jeweils zumindest eine Durchbrechung (z. B. in der Ventilkugel oder der Schieberplatte) auf. Dabei kann es sich z. B. um eine Nut handeln, die z. B. in der Schließstellung seitlich an der Ventilkugel (oder Schieberplatte) angeordnet ist und vertikal verläuft.

Da das obere und/oder untere Absperrelement in der Regel in Bereichen angeordnet ist, in denen ausreichend Platz zur Verfügung steht, kann dort vorteilhaft mit Schiebern gearbeitet werden. Die Zwischenelemente, die in das Transferrohr integriert sind, sind jedoch in der Regel nur schwer zugänglich und an beengten Stellen angeordnet, da das Transferrohr in der Praxis bevorzugt innerhalb eines Betonrohres verläuft. An diesen Stellen innerhalb des Betonrohres werden daher bevorzugt Kugelventile eingesetzt, die sich mit geringem Bauraum verwenden lassen und an diesen beengten Stellen auch einfacher auszutauschen sind als z. B. Schieber.

Ferner ist optional vorgesehen, dass das Transferrohr unterhalb des oberen Absperrelementes mit einem Seileinlass versehen ist, durch den das Zugseil aus dem Rohrinnern zu der Seilwinde hindurchgeführt ist. Das Seil der Seilzugeinrichtung wird folglich von der Seilwinde nicht stirnseitig in das Transferrohr eingeführt, sondern über einen (oberen) seitlichen Seileinlass, so dass die Seilzuführung in das Transferrohr insbesondere unterhalb des oberen (vollschließenden) Absperrelementes erfolgt. Dieses hat den Vorteil, dass das obere Absperrelement grundsätzlich nach dem Einführen der Brennelemente in das Transferrohr wieder geschlossen werden kann, da der Transfer mit Hilfe der Seilzugeinrichtung auch bei geschlossenem, oberen Absperrelement möglich ist. Das obere Absperrelement muss folglich nur für einen kurzen Zeitraum geöffnet werden, wenn die Brennelemente durch den Bereich des oberen Absperrelementes abgesenkt oder angehoben werden müssen.

Erfindungsgemäß werden die Brennelemente nicht direkt selbst durch das Transferrohr hindurchgeführt, sondern in Transferkörben. Bevorzugt nimmt jeder Transferkorb mehrere Brennelemente, z. B. vier Brennelemente auf, so dass ein beschleunigter Brennelementewechsel möglich ist.

Dabei ist es besonders zweckmäßig, wenn die Seilzugeinrichtung nicht unmittelbar (oberseitig) an die Transferkörbe angreift, sondern bevorzugt ist innerhalb des Transferrohrs ein Hubwagen geführt, an welchen das Zugseil angeschlossen ist, wobei die Transferkörbe auf diesen Hubwagen aufsetzbar sind. Der Hubwagen ist folglich während des Transfers unterhalb des Transferkorbes angeordnet. Eine solche Ausgestaltung ermöglicht unter anderem die Kombination mit dem Seileinlass unterhalb des oberen Absperrelementes, da der Hubwagen nicht vollständig oberseitig aus dem Transferrohr ausfahren muss, sondern lediglich bis in den Bereich des oberen Endes des Transferrohrs.

Die erfindungsgemäße Transfervorrichtung ist bevorzugt mit einer oberen Umladeeinrichtung im oberen Becken zum Beladen und/oder Entladen der Transferkörbe mit Brennelementen und mit einer unteren Umladeeinrichtung im unteren Becken zum Beladen und/oder Entladen der Transferkörbe mit Brennelementen vorgesehen. Dabei sind in die obere Umladeeinrichtung und/oder die untere Umladeeinrichtung jeweils zwei Transferkörbe einsetzbar, welche zur Positionierung über bzw. unter dem Transferrohr horizontal verschiebbar und im Zuge des Verschiebens (vorzugsweise selbsttätig) aus einer vertikalen Umladeposition in eine schräge Transferposition und umgekehrt schwenkbar sind. Die obere und/oder untere Umladeeinrichtung kann (jeweils) zwei Schwenkrahmen aufweisen, in welche jeweils ein Transferkorb einsetzbar ist und welchen die Transferkörbe aus einer vertikalen Umladeposition in eine schräge Transferposition und umgekehrt schwenkbar sind. Dabei ist es zweckmäßig, wenn die beiden Schwenkrahmen mit den darin angeordneten Transferkörben um eine gemeinsame horizontale Achse gegenläufig schwenkbar montiert sind, wobei die beiden Schwenkrahmen vorzugsweise gemeinsam horizontal verschiebbar und (über die eingesetzten Transferkörbe) im Zuge des Verschiebens selbsttätig schwenkbar sind. Bei dieser bevorzugten Variante erfolgt folglich im Zuge des Positionierens der Umladeeinrichtung zugleich ein Schwenken der Transferkörbe in gegenläufiger Richtung, so dass ein reibungsloser und schneller Umladebetrieb möglich ist. Besonders bevorzugt weist die Transfervorrichtung insgesamt drei Transferkörbe auf, so dass sich stets ein Transferkorb in der oberen Umladeeinrichtung und ein Transferkorb in der unteren Umladeeinrichtung befindet, während der dritte Transferkorb durch das Transferrohr hindurchgeführt werden kann. Auf diese Weise können die Umladezeiten erheblich verkürzt werden. Im Einzelnen wird dazu auf die Figurenbeschreibung verwiesen.

Im Übrigen ist es zweckmäßig, dass die Transferkörbe und/oder der Hubwagen mittels Führungselementen, z. B. Führungsrollen, an Führungsschienen geführt ist/sind, welche an der Innenwand des Transferrohrs angeordnet sind. Sofern die beschriebene Umladeeinrichtung mit Schwenkrahmen zum Einsatz kommt, ist es außerdem zweckmäßig, wenn auch die Schwenkrahmen mit Führungsschienen für zumindest die Transferkörbe sowie gegebenenfalls auch den Hubwagen ausgerüstet sind.

Im Folgenden wird die Erfindung anhand einer lediglich ein Ausführungsbeispiel darstellenden Zeichnung näher erläutert. Es zeigen
- Fig. 1: eine kerntechnische Anlage mit Reaktorgebäude und Brennelementelager in einem perspektivischen Vertikalschnitt,
- Fig. 2: einen vergrößerten Ausschnitt aus dem Gegenstand nach Fig. 1 im Bereich der oberen Umladeeinrichtung,
- Fig. 3: einen vergrößerten Ausschnitt aus dem Gegenstand nach Fig. 1 im Bereich der unteren Umladeeinrichtung,
- Fig. 4: die obere Umladeeinrichtung aus einer anderen Ansicht,
- Fig. 5: einen vergrößerten Ausschnitt aus dem Gegenstand nach Fig. 4,
- Fig. 6a, 6b: die obere Umladeeinrichtung in zwei unterschiedlichen Funktionsstellungen,
- Fig. 7a, 7b: weitere vergrößerte Ausschnitte aus dem Gegenstand nach Fig. 1 in anderer Ansicht,
- Fig. 8a, 8b: einen vergrößerten Ausschnitt aus dem Gegenstand nach Fig. 7a in unterschiedlichen Funktionsstellungen,
- Fig. 9: eine andere Ansicht auf das Transferrohr (teilaufgebrochen) während des Transfers,
- Fig. 10a,10b: die untere Umladeeinrichtung in unterschiedlichen Funktionsstellungen.

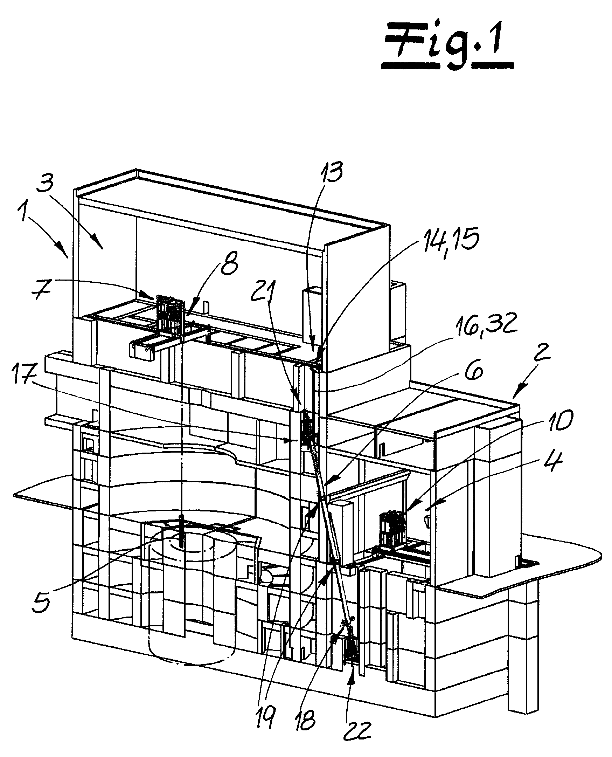

In Fig. 1 ist vereinfacht eine Kernreaktor-Anlage mit einem Reaktorgebäude 1 dargestellt, in welchem ein nicht gezeigter Kernreaktor angeordnet ist, z. B. ein Siedewasserreaktor. Neben dem Reaktorgebäude 1 ist ein Brennelementelager 2 vorgesehen. Innerhalb des Reaktorgebäudes ist ein oberes Becken 3 vorgesehen, welches mit einer Flüssigkeit auf ein oberes Niveau geflutet wird. Im Bereich des Brennelementelagers 2 ist ein unteres Becken 4 vorgesehen, welches auf ein unteres Flüssigkeitsniveau geflutet wird. Während eines Brennelementewechsels werden z. B. (abgebrannte) Brennelemente 5 aus dem Reaktor über das obere Becken 3 mit Hilfe einer Transfervorrichtung 6 in den Bereich des unteren Beckens 4 transportiert und/oder umgekehrt neue Brennelemente nach oben transportiert. Zum Entnehmen der Brennelemente 5 aus dem Reaktorbehälter ist im Reaktorgebäude 1 eine Lademaschine 7 vorgesehen, mit welcher z. B. ein Brennelement 5 aus dem Reaktorbehälter entfernt und im Bereich des oberen Beckens 3 zu der Transfervorrichtung 6 transportiert werden kann. Dazu kann die Lademaschine 7 z. B. mit einem Teleskopgreifer 8 ausgerüstet sein, mit dem das Brennelement 5, welches mit einem Griff 9 ausgerüstet ist, greifbar ist. In ähnlicher Weise ist im Brennelementelager 2 eine Lademaschine 10 vorgesehen, mit welcher die Brennelemente 5 aus dem Bereich der Transfervorrichtung 6 abtransportiert oder in den Bereich der Transfervorrichtung 6 transportiert werden können. Die vorliegende Erfindung befasst sich mit der Transfervorrichtung 6, mit der sich die Brennelemente 5 aus dem oberen Becken 3 des Reaktorgebäudes 1 in das untere Becken 4 des Brennelementelagers 2 (und umgekehrt) transportieren lassen, wobei der Flüssigkeitsspiegel des oberen Beckens oberhalb des Flüssigkeitsspiegels des unteren Beckens liegt. Die Transfervorrichtung 6 weist ein Transferrohr 11 auf, welches das obere und das untere Becken miteinander verbindet und schräg zur Vertikalen verläuft. Außerdem weist die Transfervorrichtung mehrere Transferkörbe 12 auf, d. h., die Brennelemente werden nicht direkt selbst durch das Transferrohr 11 transportiert, sondern in Transferkörben 12, wobei im Ausführungsbeispiel in einen Transferkorb vier Brennelemente einsetzbar sind. Ferner weist die Transfervorrichtung 6 eine Seilzugeinrichtung 13 auf, welche eine Seilwinde 14 mit Antrieb 15 und ein Zugseil 16 aufweist, welches innerhalb des Transferrohres 11 zum Anheben und Absenken der Transferkörbe 12 geführt ist. Das Transferrohr 11 ist mit mehreren Absperrelementen 17, 18, 19 ausgerüstet, mit denen der Rohrquerschnitt absperrbar ist, um ein Ablaufen der Flüssigkeit aus dem oberen Becken 3 in das untere Becken 4 zu verhindern bzw. zu minimieren. Das Transferrohr 11 ist an seinem oberen Ende mit einem oberen, vollschließenden Absperrelement 17 und an seinem unteren Ende mit einem unteren, vollschließenden Absperrelement 18 versehen, wobei diese Absperrelemente 17, 18 als Schieber ausgebildet sind. An dieser Stelle ist ausreichend Bauraum für die Verwendung von Schiebern vorhanden. Zwischen oberem Absperrelement 17 und unterem Absperrelement 18 sind mehrere weitere Absperrelemente, nämlich mehrere teilschließende Zwischenelemente 19 angeordnet, welche im Ausführungsbeispiel als Kugelventile ausgebildet sind. An diesen Stellen werden Kugelventile verwendet, da das Transferrohr 12 hier innerhalb einer Betonröhre verläuft und deshalb verhältnismäßig wenig Platz zur Verfügung steht.

Der Unterschied zwischen den vollschließenden Absperrelementen 17, 18 und den teilschließenden Absperrelementen 19 besteht darin, dass die teilschließenden Absperrelemente mit einem Seildurchlass 30 versehen sind, durch welchen das Zugseil 16 in Schließstellung des Absperrelementes 19 hindurchführbar ist. Demgegenüber sind die vollschließenden Absperrelemente 17, 18 ohne einen solchen Seildurchlass ausgebildet. Sämtliche Absperrelemente 17, 18, 19 müssen (vollständig) geöffnet werden, um einen Transferkorb 12 durch den jeweiligen Ventilbereich hindurchzufahren. Die teilschließenden Absperrelemente 19 können jedoch nach Durchfahren des Transferkorbes 12 geschlossen werden, da das Zugseil 16 der Seilzugvorrichtung auch bei geschlossener Ventilstellung durch den Seildurchlass 30 hindurchgeführt werden kann. Die Transfervorrichtung 6 weist außerdem einen Hubwagen 20 auf, d. h. das Zugseil 16 der Seilzugvorrichtung 13 greift nicht an die Transferkörbe 12 an, sondern ist an einen (separaten) Hubwagen 20 angeschlossen, wobei dieser Hubwagen 20 unterhalb des Transferkorbes 12 angeordnet ist, d. h., der Transferkorb 12 wird während des Transfers auf den Hubwagen 20 aufgesetzt. Auf die Vorteile dieser Ausgestaltung wird im Folgenden noch eingegangen.

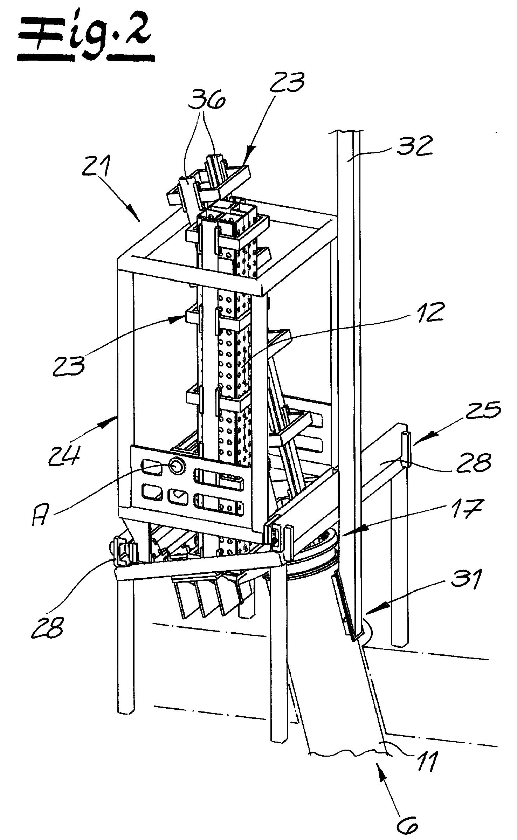

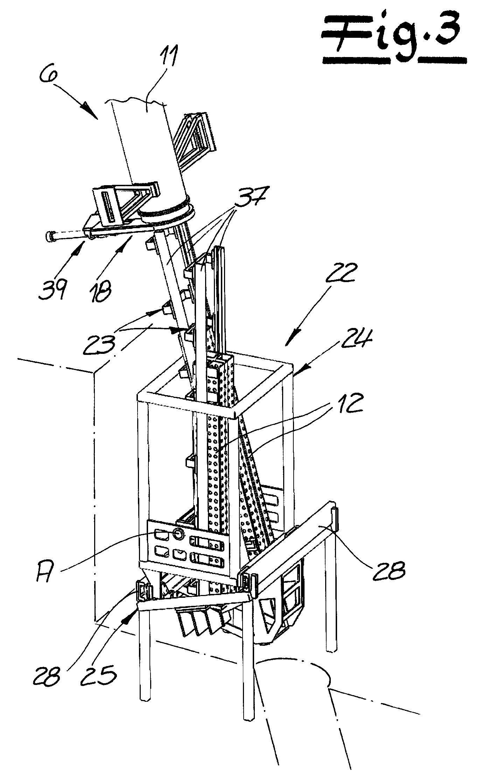

Darüber hinaus weist die Transfervorrichtung 6 gemäß Fig. 2 eine obere Umladeeinrichtung 21 im oberen Becken 3 zum Beladen und/oder Entladen der Transferkörbe 12 mit Brennelementen 5 auf. Im unteren Becken 4 weist die Transfervorrichtung 6 eine untere Umladeeinrichtung 22 (Fig. 3) zum Beladen und/oder Entladen der Transferkörbe 12 mit Brennelementen 5 auf.

Für den Transfer der Brennelemente 5 aus dem oberen Becken 3 in das untere Becken 4 wird folglich zunächst ein Transferkorb 12 mit Brennelementen 5 in der oberen Umladeeinrichtung 21 beladen. Anschließend wird der Transferkorb 12 von der oberen Umladeeinrichtung 21 durch das Transferrohr 11 in den Bereich der unteren Umladeeinrichtung 22 transportiert, und zwar mit Hilfe der Seilzugvorrichtung 13. In der unteren Umladeeinrichtung 22 können die Brennelemente 5 dann (z. B. mit Hilfe der Lademaschine 10) aus dem Transferkorb 12 entnommen werden. Anschließend kann der Transferkorb 12 (z. B. leer ohne Brennelemente) wieder mit Hilfe der Seilzugvorrichtung 13 durch das Transferrohr 11 nach oben transportiert werden.

Um einen schnellen und damit wirtschaftlichen Transfer zu gewährleisten sind sowohl in die obere Umladeeinrichtung 21 als auch in die untere Umladeeinrichtung 22 jeweils zwei Transferkörbe 12 einsetzbar, welche zur Positionierung über bzw. unter dem Transferrohr 11 horizontal verschiebbar und im Zuge des Verschiebens bevorzugt selbsttätig aus einer vertikalen Umladeposition in eine schräge Transferposition und umgekehrt schwenkbar sind. Die Transferkörbe 12 werden folglich in einer vertikalen Umladeposition mit den Brennelementen 5 beladen und dementsprechend werden die Brennelemente 5 auch in einer solchen vertikalen Umladeposition aus den Transferkörben 12 entnommen. Für den Transport innerhalb des Transferrohrs 11 werden die Transferkörbe 12 dann in die schräge Transferposition geschwenkt. Bei der dargestellten Ausführungsform erfolgt dieses Schwenken der Transferkörbe 12 selbsttätige im Zuge des Verschiebens der Transferkörbe 12. Dieses soll beispielhaft zunächst anhand der oberen Umladeeinrichtung 21 erläutert werden. Die obere Umladeeinrichtung 21 ist mit zwei Schwenkrahmen 23 ausgerüstet, in welche jeweils ein Transferkorb einsetzbar ist und in welchen die Transferkörbe 12 aus einer vertikalen Umladeposition in eine schräge Transferposition und umgekehrt schwenkbar sind. Dabei sind die beiden Schwenkrahmen 23 mit den darin angeordneten Transferkörben 12 um eine gemeinsame (horizontale) Achse A gegenläufig schwenkbar montiert. Die beiden Schwenkrahmen 23 sind gemeinsam horizontal verschiebbar und über die eingesetzten Transferkörbe 12 im Zuge des Verschiebens selbsttätig schwenkbar, und zwar gegenläufig. Dazu sind die beiden Schwenkrahmen 23 in einem gemeinsamen Verschieberahmen 24 schwenkbar angeordnet und mit diesem verschiebbar, wobei die Schwenkrahmen mit den eingesetzten Transferkörben 12 durch Verschieben des Verschieberahmens 24 innerhalb des Tragrahmens 25 relativ zu dem Transferrohr positionierbar und dabei selbsttätig schwenkbar sind. Dieses gelingt durch Steuerschienen 26, die im Ausführungsbeispiel kurvenförmig ausgebildet sind, wobei die Schwenkrahmen 23 bzw. die eingesetzten Transferkörbe 12 im Zuge des Verschiebens derart in den Steuerschienen 26 geführt sind, dass die Transferkörbe 12 selbsttätig verschwenken, denn die Transferkörbe 12 weisen im Ausführungsbeispiel unterseitige Steuerzapfen 27 auf, welche in die Steuerschienen 26 eingreifen. Dabei weist der Tragrahmen 25 zwei Führungsschienen 28 auf, in denen der Verschieberahmen 24 horizontal linear geführt ist, und zwar über einen Antrieb 29.

In ähnlicher Weise ist die untere Umladeeinrichtung 22 ausgestaltet, die ebenfalls einen Tragrahmen 25, einen Verschieberahmen 24 und zwei Schwenkrahmen 23 aufweist. Bevorzugt sind drei Transferkörbe vorgesehen.

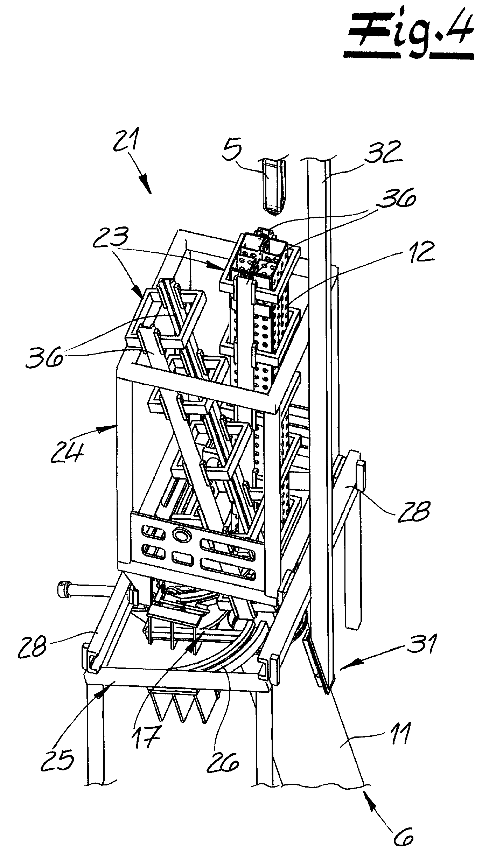

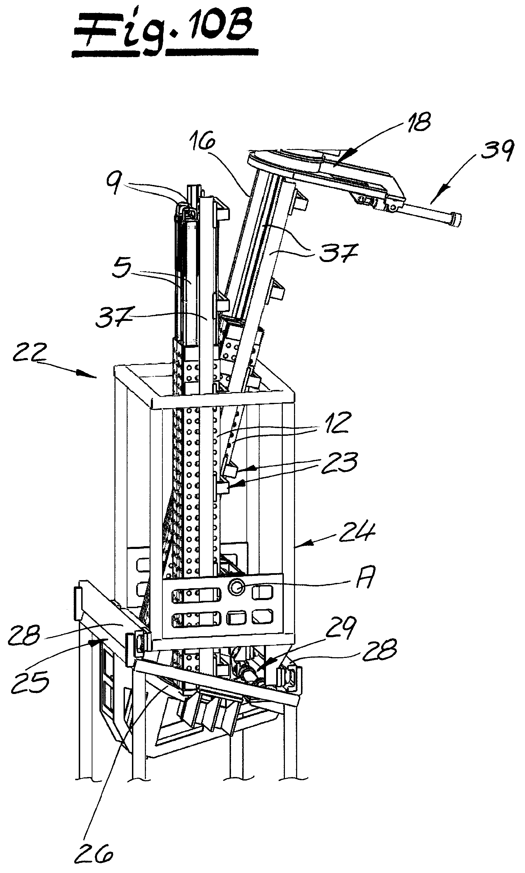

Die Funktionsweise der erfindungsgemäßen Transfervorrichtung 6 soll nun anhand der Fig. 4 bis 10a, 10b. erläutert werden. Zunächst werden die Brennelemente 5 aus dem Reaktorbehälter mit Hilfe der Lademaschine 7 entnommen und in den Bereich der oberen Umladeeinrichtung 21 transportiert. Dort befindet sich innerhalb eines Schwenkrahmens 23 ein Transferkorb 12 in der vertikalen Umladeposition, so dass vier Brennelemente in den Transferkorb 12 eingesetzt werden können (vgl. Fig. 4). Dieser Transferkorb 12 befindet sich in der vertikalen Umladeposition seitlich versetzt neben dem Transferrohr 11. Über dem Transferrohr 11 befindet sich z. B. ein leerer Transferkorb 12 in der schrägen Transferposition, wobei dieser leere Transferkorb 12 beispielsweise während des Beladens des anderen Transferkorbes aus dem Bereich der unteren Umladeeinrichtung 22 nach oben transportiert wurde.

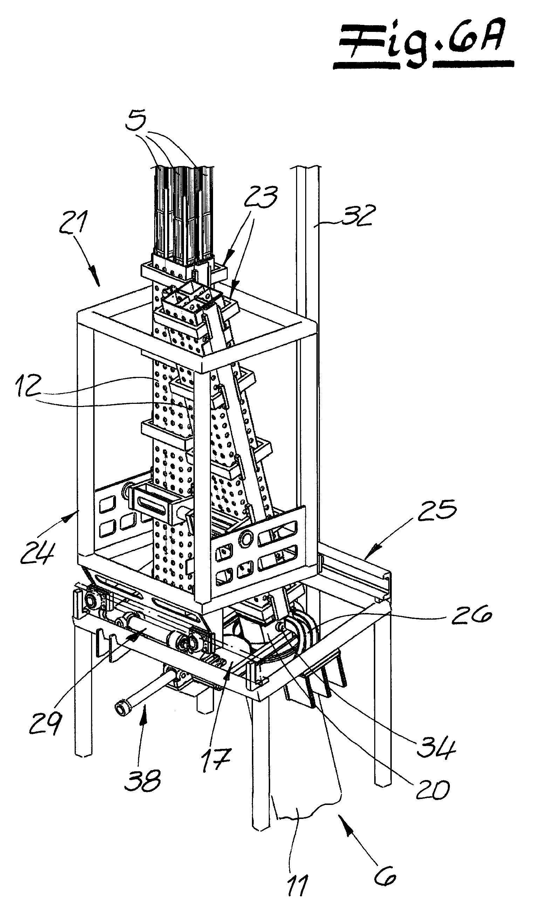

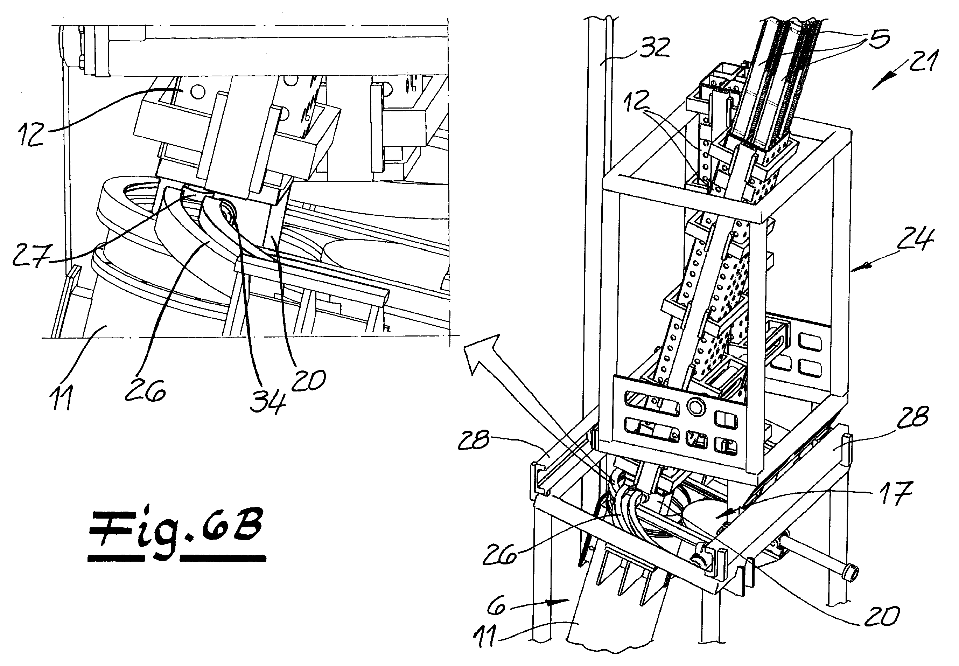

Um nun den befüllten Transferkorb 12 über dem Transferrohr 11 zu positionieren, wird der Verschieberahmen 24 mit den darin angeordneten Schwenkrahmen 23 verschoben. Dieses ergibt sich aus einer vergleichenden Betrachtung der Fig. 6a und 6b, welche die obere Umladeeinrichtung 21 in unterschiedlichen Funktionsstellungen und in unterschiedlichen Ansichten zeigen. Die Transferkörbe 12 greifen mit ihren unteren Steuerzapfen 27 in die Steuerschienen 26, so dass im Zuge des Verschiebens des Verschieberahmens 24 und damit auch der Schwenkrahmen 23 diese Schwenkrahmen 23 mit den darin eingesetzten Transferkörben 12 gegenläufig schwenken, so dass der befüllte Transferkorb 12 nicht nur über dem Transferrohr 11 positioniert, sondern zugleich auch aus der vertikalen Umladeposition in die schräge Transferposition geschwenkt wird.

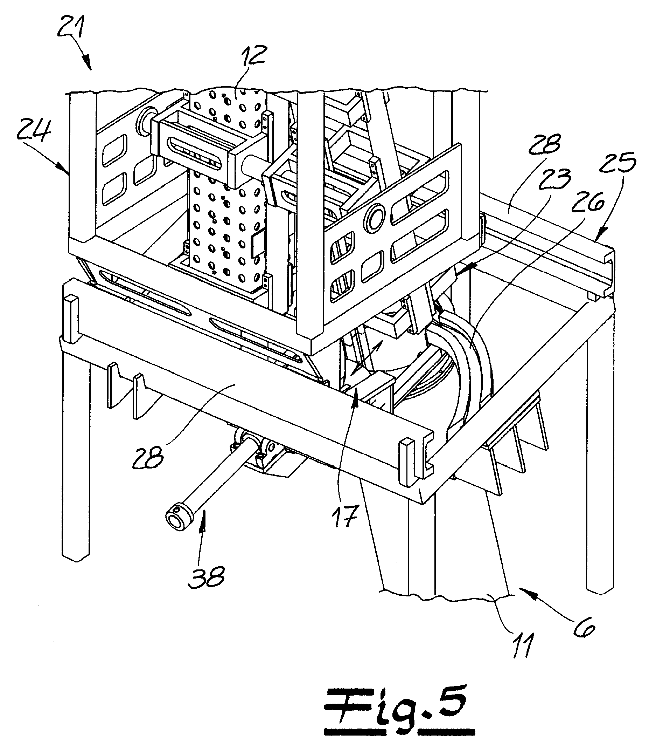

Der Hubwagen 20, mit dem zuvor ein leerer Transferkorb 12 von unten nach oben transportiert wurde, befindet sich folglich nach wie vor im Bereich des oberen Endes des Transferrohres 11, so dass der befüllte Transferkorb 12 im Zuge des Verschiebens des Verschieberahmens 24 auf den Hubwagen 20 aufgesetzt wird. Das obere Absperrelement 17 ist dabei geöffnet (vgl. Fig. 5).

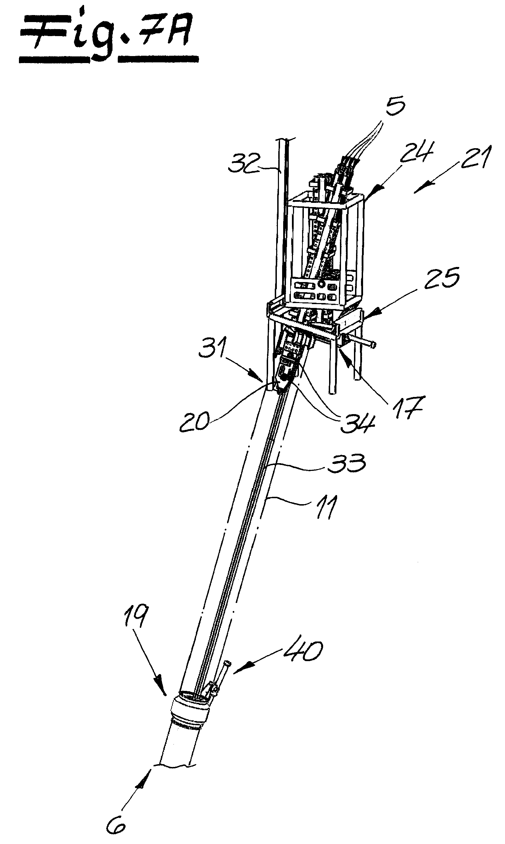

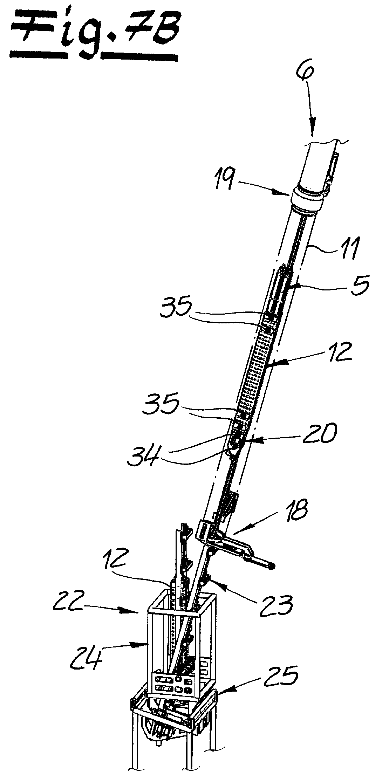

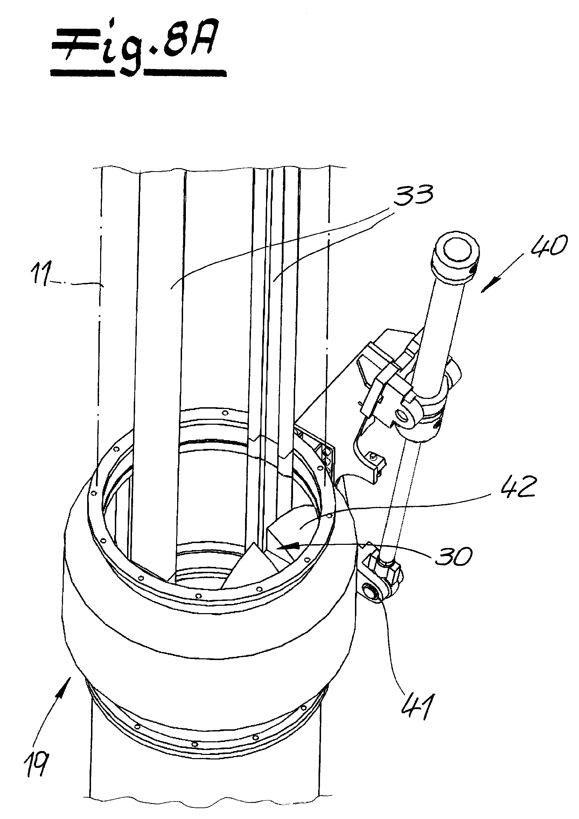

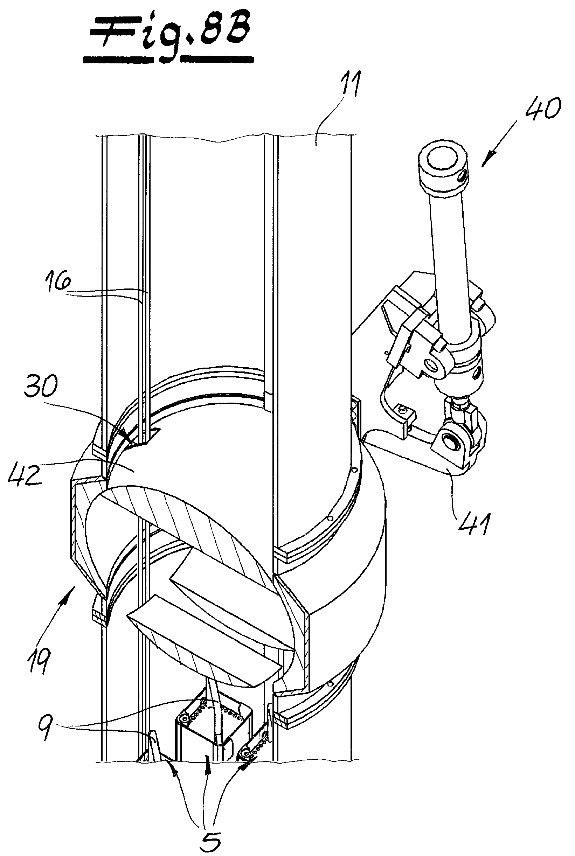

Nun kann der Hubwagen 20 mit dem darauf aufgesetzten befüllten Transferkorb 12 mit Hilfe der Seilzugvorrichtung 13 abgesenkt werden (vgl. Fig. 7a, 7b). Das untere Absperrorgan 18 ist zunächst geschlossen. Gleiches gilt für die Zwischenventile (Kugelventile 19) im Inneren des Transferrohres 11. Im Zuge des Absenkens des Hubwagens 20 mit dem Transferkorb 12 werden dann die Zwischenventile 19 einzeln nach und nach schleusenartig geöffnet und nach Durchfahren des Hubwagens mit Transferkorb 12 sofort wieder geschlossen. Dieses ist möglich, weil die Zwischenventile 19 jeweils einen Seildurchlass 30 aufweisen, durch welchen das Zugseil 16 in der Schließstellung dieses Ventils hindurchführbar ist. Auf diese Weise wird das Ablaufen von Flüssigkeit aus dem oberen Becken 3 in das untere Becken 4 während des Transfers verhindert (vgl. Fig. 8a, 8b).

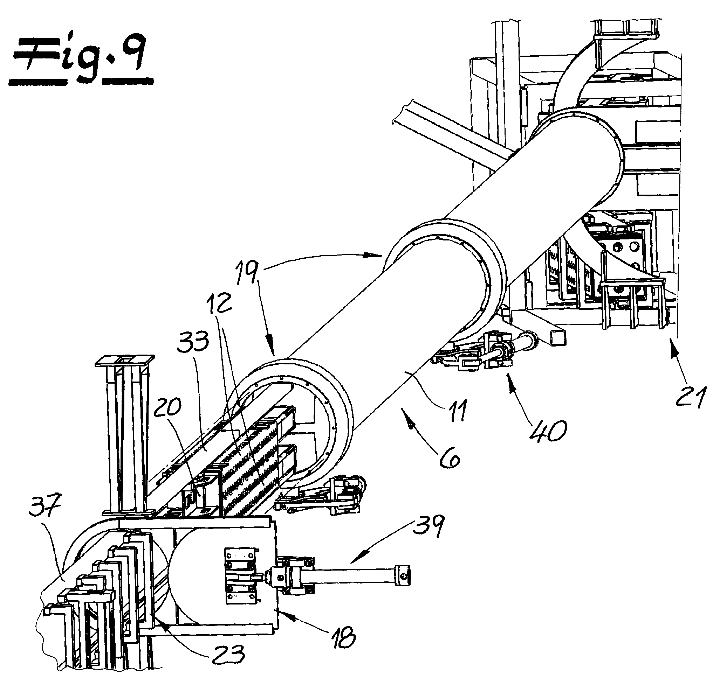

Bevor der Transferkorb 12 unterseitig aus dem Transferrohr 11 austreten kann, wird der untere Schieber 18 geöffnet. Dazu wird auf Fig. 9 verwiesen, welche das Transferrohr 11 in einer Ansicht schräg von unten zeigt. Es ist erkennbar, dass der Transferkorb 12 unterhalb des unteren Zwischenventils 19 abgesenkt wird, wobei dieses Zwischenventil 19 geschlossen ist. Der untere Schieber 18 wird geöffnet.

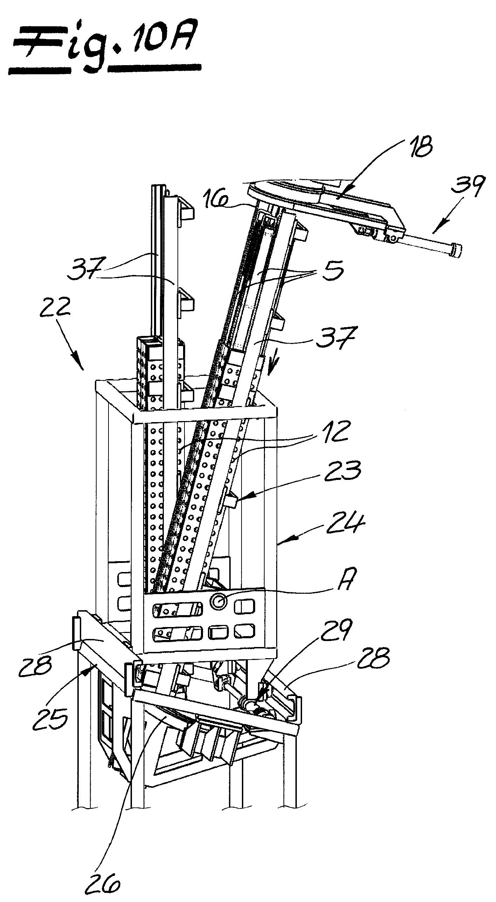

Der Hubwagen 20 mit dem darauf aufgesetzten Transferkorb 12 tritt dann unterseitig aus dem Transferrohr 11 aus und folglich in die untere Umladeeinrichtung 22 ein. Dazu wird auf eine vergleichende Betrachtung der Fig. 10a, 10b verwiesen.

In der unteren Umladeeinrichtung 22 befindet sich folglich der befüllte Transferkorb 12 in der schrägen Transferposition und außerdem ist wiederum ein leerer Transferkorb 12 in der vertikalen Umladeposition vorgesehen. Der Verschieberahmen 24 kann wieder verschoben werden, so dass die Transferkörbe entsprechend positioniert und geschwenkt werden. Der befüllte Transferkorb 12 gelangt folglich in die vertikale Umladeposition, während der leere Transferkorb 12 unterhalb des Transferrohres 11 in die schräge Transferposition gelangt. Nun kann der leere Transferkorb 12 wiederum mit dem Hubwagen 20 nach oben transportiert werden. In der gleichen Zeit kann der befüllte Transferkorb 12 mit der unteren Transportvorrichtung 10 entladen werden.

Damit wird deutlich, dass ein schneller Transfer der Brennelemente realisiert werden kann. Insbesondere kann zeitgleich in der oberen Umladeeinrichtung beladen und in der unteren Umladeeinrichtung entladen werden. Insbesondere kann während des Beladens und Entladens ein Transport eines weiteren Transferkorbes 12 durch die Transfervorrichtung realisiert werden. Bevorzugt werden folglich zumindest zwei Transferkörbe vorgesehen. Im Ausführungsbeispiel sind jedoch drei Transferkörbe vorgesehen, wobei sich stets ein Transferkorb in der oberen Umladeeinrichtung und ein Transferkorb in der unteren Umladeeinrichtung befindet, während ein dritter Transferkorb zwischen der oberen Umladeeinrichtung und der unteren Umladeeinrichtung transportiert werden kann.

In Fig. 2 ist außerdem erkennbar, dass das Zugseil 16 der Seilzugvorrichtung 13 nicht über das obere Stirnende des Transferrohres 11 in das Transferrohr eingeführt ist, sondern dass das Transferrohr 11 unterhalb des oberen Schiebers 17 einen (seitlichen) Seileinlass 31 aufweist, durch den das Zugseil 16 aus dem Rohrinnern zu der Seilwinde 14 hindurchgeführt ist, und zwar durch ein Seilführungsrohr 32. Dieser Seileinlass 31 ist folglich unterhalb des Schiebers 17 und insbesondere unterhalb der oberen Umladeeinrichtung 21 angeordnet. Ein solcher Seileinlass ist insbesondere in Verbindung mit dem beschriebenen Hubwagen 20 zweckmäßig, der unterhalb der Transferkörbe 12 angeordnet ist.

In den Figuren sind im Übrigen die Führungsschienen 33 innerhalb des Transferrohres 11 erkennbar. Der Hubwagen 20 ist mit Führungselementen, nämlich Rollen 34 ausgerüstet, die in diesen Führungsschienen 33 geführt sind. Auch die Transferkörbe sind mit Führungselementen 35 in Form von Rollen ausgerüstet, die ebenfalls in den Führungsschienen 33 geführt sind. Außerdem sind im Bereich der oberen Umladeeinrichtung 21 ebenfalls Führungsschienen 36 und im Bereich der unteren Umladeeinrichtung Führungsschienen 37 vorgesehen.

Die obere Umladeeinrichtung 21 und die untere Umladeeinrichtung 22 sind im Ausführungsbeispiel funktionell gleichwertig ausgebildet. Sie unterscheiden sich in ihrer Konstruktion in bestimmten Details. Dieses betrifft z. B. die Schwenkrahmen 23. Es ist erkennbar, dass die Schwenkrahmen 23 der oberen Umladeeinrichtung vollumfänglich geschlossen sind, während die Schwenkrahmen 23 der unteren Umladeeinrichtung einseitig offen sind. Dieses hängt damit zusammen, dass das Zugseil 16 in der unteren Umladeeinrichtung 22 an den Schwenkrahmen 23 vorbeigeführt werden muss, so dass ein Verschwenken der Schwenkrahmen 23 durch das Zugseil nicht behindert werden darf.

Schließlich ist in den Figuren ebenfalls angedeutet, dass die Absperrelemente 17, 18, 19 pneumatisch angetrieben sind. Dazu ist der obere Schieber 17 mit einem pneumatischen Antrieb 38 versehen. Der untere Schieber 18 ist mit einem pneumatischen Antrieb 39 versehen. Die Kugelventile 19 sind ebenfalls mit pneumatischen Antrieben 40 versehen, welche als Linearantriebe ausgebildet sind und über einen Schwenkhebel 41 auf die Ventilkugel 42 des Ventils 19 arbeiten, wobei diese Ventilkugel 42 den beschriebenen Seildurchlass 30 aufweist, der als Durchbrechung der Ventilkugel 42 ausgebildet ist.

Im Ausführungsbeispiel sind pneumatische Antriebe dargestellt. Alternativ können aber auch elektrische oder hydraulische Antriebe zum Einsatz kommen.

## Patentansprüche

1. Transfervorrichtung (6) für den Transfer von Brennelementen (5) zwischen einem oberen Becken (3) und einem unteren Becken (4) einer kerntechnischen Anlage, z. B. einem oberen Becken innerhalb eines Reaktorgebäudes (1) und einem unteren Becken eines Brennelementelagers (2), wobei der Flüssigkeitsspiegel des oberen Beckens (3) oberhalb des Flüssigkeitsspiegels des unteren Beckens liegt, mit
einem das obere und das untere Becken verbindenden und schräg zur Vertikalen verlaufenden Transferrohr (11),
einem oder mehreren Transferkörben (12), in welche jeweils ein oder mehrere Brennelemente (5) für den Transfer durch das Transferrohr (12) einsetzbar sind,
wobei das Transferrohr (11) mit einem oder mehreren Absperrelementen (17, 18, 19) ausgerüstet ist, mit denen der Rohrquerschnitt absperrbar ist,
wobei die Transfervorrichtung (6) eine Seilzugeinrichtung (13) mit einem innerhalb des Transferrohres (11) geführten Zugseil (16) zum Anheben und Absenken der Transferkörbe (12) innerhalb des Transferrohres (11) aufweist,
**dadurch gekennzeichnet, dass** zumindest ein Absperrelement als teilschließendes Absperrelement (19) mit einem Seildurchlass (30) versehen ist, durch welchen das Zugseil (16) in Schließstellung hindurchführbar ist.

2. Vorrichtung nach Anspruch 1, **dadurch gekennzeichnet, dass** das Transferrohr (11) an seinem oberen Ende ein oberes vollschließendes Absperrelement (17) ohne Seildurchlass und an seinem unteren Ende ein unteres vollschließendes Absperrelement (18) ohne Seildurchlass und zwischen oberem und unterem Absperrelement (17, 18) ein oder mehrere teilschließende Zwischen-Absperrelemente (19) mit Seildurchlass aufweist.

3. Vorrichtung nach Anspruch 1 oder 2, **dadurch gekennzeichnet, dass** die vollschließenden Absperrelemente (17, 18) als Schieber oder Kugelventile ausgebildet sind, z. B. als pneumatisch, elektrisch oder hydraulisch angetriebene Schieber oder Kugelventile.

4. Vorrichtung nach einem der Ansprüche 1 bis 3, **dadurch gekennzeichnet, dass** die teilschließenden Absperrelemente (19) als Kugelventile oder als Schieber ausgebildet sind, deren Ventilkugel oder Schieberplatte mit einem Seildurchlass versehen ist, z. B. als pneumatisch, elektrisch oder hydraulisch angetriebene Kugelventile oder Schieber.

5. Vorrichtung nach einem der Ansprüche 1 bis 4, **gekennzeichnet durch** einen innerhalb des Transferrohres (11) geführten Hubwagen (20), an welchen das Zugseil (16) angeschlossen ist und auf welchen ein Transferkorb (12) für den Transfer aufsetzbar ist.

6. Vorrichtung nach einem der Ansprüche 1 bis 5, **gekennzeichnet durch** eine obere Umladeeinrichtung (21) im oberen Becken (3) zum Beladen und/oder Entladen der Transferkörbe (12) mit Brennelementen und einer unteren Umladeeinrichtung (22) im unteren Becken (4) zum Beladen und/oder Entladen der Transferkörbe (12) mit Brennelementen,
wobei in die obere Umladeeinrichtung (21) und/oder die untere Umladeeinrichtung (22) jeweils zwei Transferkörbe (12) einsetzbar sind, welche zur Positionierung über bzw. unter dem Transferrohr (11) verschiebbar und im Zuge des Verschiebens (selbsttätig) aus einer vertikalen Umladeposition in eine schräge Transferposition und umgekehrt schwenkbar sind.

7. Vorrichtung nach Anspruch 6, **dadurch gekennzeichnet, dass** die obere und/oder untere Umladeeinrichtung (21, 22) zwei Schwenkrahmen aufweist, in welche jeweils ein Transferkorb einsetzbar ist und in welchen die Transferkörbe (12) aus einer vertikalen Umladeposition in eine schräge Transferposition umgekehrt schwenkbar sind, wobei die Schwenkrahmen mit dem oder den darin angeordneten Transferkörben vorzugsweise um eine gemeinsame (horizontale) Achse (A) gegenläufig schwenkbar montiert sind.

8. Vorrichtung nach Anspruch 7, **dadurch gekennzeichnet, dass** die Schwenkrahmen (23) oder die darin eingesetzten Transferkörbe (12) im Zuge des Verschiebens derart in/an Steuerschienen (26) geführt sind, dass die Transferkörbe (12) selbsttätig schwenken, vorzugsweise indem unterseitige Steuerzapfen (27) der Transferkörbe (12) in den Steuerschienen (26) geführt sind.

9. Vorrichtung nach einem der Ansprüche 1 bis 8, wobei die Transferkörbe (12) und/oder der Hubwagen (20) mittels Führungselementen (34, 35) an Führungsschienen (33, 36, 37) geführt ist/sind, welche z. B. an der Innenwand des Transferrohrs (11) angeordnet sind.

10. Vorrichtung nach Anspruch 9, **dadurch gekennzeichnet, dass** der obere und/oder der untere Schwenkrahmen (23) mit Führungsschienen (36, 37) für die Transferkörbe (12) und/oder den Hubwagen (20) ausgerüstet sind.

11. Vorrichtung nach einem der Ansprüche 1 bis 10, **dadurch gekennzeichnet, dass** das Transferrohr (11) unterhalb des oberen Absperrelementes (17) mit einem Seileinlass (31) versehen ist, durch den das Zugseil (16) aus dem Rohrinnern zu der Seilwinde (14) hindurchgeführt ist.

## Claims

1. A transfer device (6) for the transfer of fuel elements (5) between an upper pool (3) and a lower pool (4) of a nuclear plant, e.g. an upper pool inside a reactor building (1) and a lower pool of a fuel element store (2), wherein
the fluid level of the upper pool (3) lies above the fluid level of the lower pool, with
a transfer pipe (11) connecting the upper and lower pools and running at an inclination to the vertical,
one or a plurality of transfer cages (12) into which in each case one or a plurality of fuel elements (5) can be inserted for the transfer through the transfer pipe (11), wherein
the transfer pipe (11) is fitted with one or a plurality of blocking elements (17, 18, 19), with which the pipe cross-section can be blocked, wherein
the transfer device (6) has a pull cable device (13) with a pull cable (16) guided within the transfer pipe (11) for purposes of raising and lowering the transfer cages (12) within the transfer pipe (11),
**characterised in that**,
at least one blocking element is provided as a partially-closing blocking element (19) with a cable passage (30), through which the pull cable (16) can be guided in the closed position.

2. The device in accordance with claim 1,
**characterised in that**,
at its upper end the transfer pipe (11) has an upper fully-closing blocking element (17) without a cable passage, and at its lower end it has a lower fully-closing blocking element (18) without a cable passage, and between the upper and lower blocking elements (17, 18) it has one or a plurality of partially-closing intermediate blocking elements (19) with cable passages.

3. The device in accordance with claim 1 or 2,
**characterised in that**,
the fully-closing blocking elements (17, 18) are designed as slide valves or ball valves, e.g. as pneumatically, electrically or hydraulically driven slide valves or ball valves.

4. The device in accordance with one of the claims 1 to 3,
**characterised in that**,
the partially-closing blocking elements (19) are designed as ball valves or slide valves, whose valve ball or slide valve plate is provided with a cable passage, e.g. as pneumatically, electrically or hydraulically driven ball valves or slide valves.

5. The device in accordance with one of the claims 1 to 4,
**characterised by**
a lifting carriage (20) guided within the transfer pipe (11), to which the pull cable (16) is connected, and on which a transfer cage (12) can be positioned for the transfer.

6. The device in accordance with one of the claims 1 to 5,
**characterised by**
an upper transhipment device (21) in the upper pool (3) for purposes of loading and/or unloading the transfer cages (12) with fuel elements, and/or a lower transhipment device (22) in the lower pool (4) for purposes of loading and/or unloading the transfer cages (12) with fuel elements, wherein
in each case two transfer cages (12) can be inserted into the upper transhipment device (21) and/or the lower transhipment device (22), which for purposes of positioning over or under the transfer pipe (11) can be displaced and in the course of the displacement can be (automatically) swivelled out of a vertical transhipment position into an inclined transfer position, and vice versa.

7. The device in accordance with claim 6,
**characterised in that**,
the upper and/or lower transhipment device (21, 22) has two swivelling frames, into which one transfer cage can be inserted in each case, and in which the transfer cages (12) can be swivelled out of a vertical transhipment position into an inclined transfer position, and vice versa, wherein
the swivelling frames, with the one or more transfer cages therein arranged, are preferably mounted such that they can be swivelled in opposite directions about a common (horizontal) axis (A).

8. The device in accordance with claim 7,
**characterised in that**,
in the course of displacement the swivelling frames (23) or the transfer cages (12) therein inserted are guided in/on control rails (26), which automatically swivel the transfer cages (12), preferably **in that** control pins (27) located on the underside of the transfer cages (12) are guided in the control rails (26).

9. The device in accordance with one of the claims 1 to 8, wherein
the transfer cages (12) and/or the lifting carriage (20) is/are guided by means of guide elements (34, 35) on guide rails (33, 36, 37), which are, e.g., arranged on the inner wall of the transfer pipe (11).

10. The device in accordance with claim 9,
**characterised in that**,
the upper and/or the lower swivelling frames (23) are fitted with guide rails (36, 37) for the transfer cages (12) and/or the lifting carriage (20).

11. The device in accordance with one of the claims 1 to 10,
**characterised in that**,
beneath the upper blocking element (17) the transfer pipe (11) is provided with a cable inlet (31), through which the pull cable (16) is guided out of the interior of the pipe to the cable winch (14).

## Revendications

1. Panier de transfert (6) pour le transfert d'éléments combustibles (5) entre un bassin supérieur (3) et un bassin inférieur (4) d'une installation de technique nucléaire, par ex. un bassin supérieur à l'intérieur d'un bâtiment de réacteur (1) et un bassin inférieur d'un stockage d'éléments combustibles (2), sachant que le niveau de liquide du bassin supérieur (3) se situe au-dessus de niveau de liquide du bassin inférieur, comprenant
un tube de transfert (11) incliné par rapport à la verticale et reliant les bassins supérieur et inférieur,
un ou plusieurs panier(s) de transfert (12) dans lesquels respectivement un ou plusieurs combustible(s) (5) peuvent être insérés pour le transfert à travers le tube de transfert (11),
sachant que le tube de transfert (11) est équipé d'un ou plusieurs élément(s) de blocage (17, 18, 19) avec lesquels la section du tube peut être bloquée,
sachant que le dispositif de transfert (6) présente un dispositif de traction à câble (13) avec un câble de traction (16) à l'intérieur du tube de transfert (11) pour soulever et abaisser les paniers de transfert (12) à l'intérieur du tube de transfert (11),
**caractérisé en ce qu'**au moins un élément de blocage est prévu en tant qu'élément de blocage (19) à fermeture partielle avec un passage de câble (30), au travers duquel le câble de traction (16) peut être dirigé dans la position de fermeture.

2. Dispositif selon la revendication 1, **caractérisé en ce que** le tube de transfert (11) présente sur son extrémité supérieure un élément de blocage supérieur (17) à fermeture complète sans passage de câble et sur son extrémité inférieure, un élément de blocage (18) à fermeture complète sans passage de câble, et entre les éléments de blocage supérieur et inférieur (17, 18), un ou plusieurs élément(s) de blocage (19) intermédiaires à fermeture partielle avec passage de câble.

3. Dispositif selon la revendication 1 ou 2, **caractérisé en ce que** les éléments de blocage (17, 18) à fermeture complète sont conçus en tant que poussoirs ou clapets à bille, par ex. en tant que poussoirs ou clapets à bille à entraînement pneumatique, électrique ou hydraulique.

4. Dispositif selon l'une des revendications 1 à 3, **caractérisé en ce que** les éléments de blocage (19) à fermeture partielle sont conçus en tant que clapets à bille ou en tant que poussoirs dont la bille de clapet ou le plateau de poussoir est doté d'un passage de câble, par exemple en tant que poussoirs ou clapets à bille à entraînement pneumatique, électrique ou hydraulique.

5. Dispositif selon l'une des revendications 1 à 4, **caractérisé par** un chariot de levage (20) dirigé à l'intérieur du tube de transfert (11), sur lequel le câble de traction (16) est raccordé et sur lequel un panier de transfert (12) peut être placé pour le transfert.

6. Dispositif selon l'une des revendications 1 à 5, **caractérisé par** un dispositif de transbordement supérieur (21) dans le bassin supérieur (3) pour charger et/ou décharger les paniers de transfert (12) d'éléments combustibles et un dispositif de transbordement inférieur (22) dans le bassin inférieur (4) pour charger et/ou décharger les paniers de transfert (12) d'éléments combustibles, sachant que deux paniers de transport respectifs (12) peuvent être insérés dans le dispositif de transbordement supérieur (21) supérieur et/ou le dispositif de transbordement inférieur (22), lesquels peuvent être déplacés au-dessus, respectivement, en-dessous du tube de transfert (11) pour le positionnement, et à la suite du déplacement (automatique), peuvent être basculés d'une position de transbordement verticale à une position de transfert inclinée et inversement.

7. Dispositif selon la revendication 6, **caractérisé en ce que** les dispositifs de transbordement supérieur et/ou inférieur (21, 22) présente(nt) deux bras pivotants dans lesquels un panier de transfert respectif peut être placé et dans lesquels les paniers de transfert (12) peuvent pivoter d'une position de transbordement verticale à une position de transfert inclinée et inversement, sachant que les bras pivotants sont montés pivotants en sens inverse sur un axe (a) (horizontal) commun avec le ou les panier(s) de transfert disposé(s) dedans.

8. Dispositif selon la revendication 7, **caractérisé en ce que** les bras pivotants (23) ou les paniers de transfert (12) insérés dedans sont dirigés de telle façon dans/sur des rails de commande (26) à la suite du déplacement que les paniers de transport (12) basculent automatiquement, de préférence **en ce que** des broches de commande (27) en sous-face des paniers de transport (12) sont dirigées dans les rails de guidage (26).

9. Dispositif selon l'une des revendications 1 à 8, **caractérisé en ce que** les paniers de transfert (12) et/ou le chariot de levage (20) est/sont dirigé(s) au moyen d'éléments de guidage (34, 35) sur des rails de guidage (33, 36, 37), lesquels sont disposés par exemple sur la paroi intérieure du tube de transfert (11).

10. Dispositif selon la revendication 9, **caractérisé en ce que** les bras pivotants supérieur et/ou inférieur (23) sont équipés de rails de guidage (36, 37) pour les paniers de transfert (12) et/ou le chariot de levage (20).

11. Dispositif selon l'une des revendications 1 à 10, **caractérisé en ce que** le tube de transfert (11) en-dessous de l'élément de blocage supérieur (17) est doté d'une entrée de câble (31) à travers laquelle le câble de traction (16) peut être passé de l'intérieur du tube vers le treuil (14).
